# EUROPÄISCHE PATENTANMELDUNG

(11) **EP 2 192 371 A2**
(43) Veröffentlichungstag der Anmeldung: **02.06.2010**
(21) Anmeldenummer: 09175095.0
(22) Anmeldetag: 05.11.2009
(51) Int. Cl.: F28D 20/00

(54) **Flüssigkeits-Wärmespeicher mit horizontaler Temperaturschichtung**

(30) Priorität: 14.01.2009 DE 202009000409 U; 12.11.2008 DE 102008056879
(71) Anmelder: Schäfer, Viktor, 96215 Lichtenfels (DE); EBITSCHenergietechnik GmbH, 96199 Zapfendorf (DE)
(72) Erfinder: Schäfer, Viktor, 96215 Lichtenfels (DE); Ebitsch, Horst, 96199 Unterleiterbach (DE)
(74) Vertreter: Eichstädt, Alfred

(57) **Zusammenfassung**

Ein Flüssigkeits-Wärmespeicher weist eine Mehrzahl von geschlossenen Speichergefäßen (1, 2, 3) auf, die mit einer Speicherflüssigkeit (7) gefüllt sind. Die Speichergefäße (1, 2, 3) sind bodenseitig derart miteinander verbunden, dass sie eine Sequenz bilden. Zumindest das erste Speichergefäß (1) weist eine Kreislauf-Zuführstelle (8) auf, mindestens ein anderes (2, 3) der Speichergefäße (1, 2, 3) eine Kreislauf-Entnahmestelle (9). Die Kreislauf-Entnahmestelle (9) des anderen Speichergefäßes (2, 3) ist mit der Kreislauf-Zuführstelle (8) des ersten Speichergefäßes (1) über eine Leitung (10) verbunden. In der Leitung (10) ist eine Pumpe (11, 11") angeordnet, mittels derer die Speicherflüssigkeit (7) vom anderen Speichergefäß (2, 3) in das erste Speichergefäß (1) pumpbar ist, Der Flüssigkeits-Wärmespeicher weist eine Heizeinrichtung (12) auf, mittels derer vom anderen Speichergefäß (2, 3) in das erste Speichergefäß (1) gepumpte Speicherflüssigkeit (7) erwärmbar ist. Das andere Speichergefäß (2, 3) und etwaige in der Sequenz von Speichergefäßen (1 bis 3) zwischen dem ersten und dem anderen Speichergefäß (1, 3) angeordnete Speichergefäße (2) sind derart ausgebildet, dass die über die jeweilige bodenseitige Verbindung in das jeweilige Speichergefäß (2, 3) geförderte Speicherflüssigkeit (7) in dem Fall, dass sie wärmer als die bereits im jeweiligen Speichergefäß (2, 3) befindliche Speicherflüssigkeit (7) ist, in dem jeweiligen Speichergefäß (2, 3) nach oben steigt, bis sie den Deckenbereich des jeweiligen Speichergefäßes (2, 3) erreicht oder auf eine Schicht der Speicherflüssigkeit (7) stößt, welche die gleiche Temperatur aufweist. Anderenfalls verbleibt sie im Bodenbereich des jeweiligen Speichergefäßes (2, 3).

## Beschreibung

Die vorliegende Erfindung betrifft einen Flüssigkeitswärmespeicher.

Für die Speicherung von Wärme, wie sie beispielsweise bei solarbasierten Heizsystemen oder bei Blockheizkraftwerken anfällt, wird im Stand der Technik oftmals ein Flüssigkeits-Wärmespeicher verwendet. Es wird hierbei versucht in einem derartigen Wärmespeicher eine Wärmeschichtung aufzubauen, also warme bzw. heiße Speicherflüssigkeit oben, kältere bzw. kalte Speicherflüssigkeit unten. Als Speicherflüssigkeit wird in der Regel Wasser verwendet.

Im Stand der Technik besteht ein derartiger Flüssigkeits-Wärmespeicher aus einem einzigen geschlossenen Speichergefäß, das mit der Speicherflüssigkeit gefüllt ist. Der Flüssigkeits-Wärmespeicher weist mindestens eine Heizeinrichtung auf, mittels derer die im Speichergefäß befindliche Speicherflüssigkeit erwärmbar ist.

Derartige Flüssigkeits-Wärmespeicher existieren unter anderem als sogenannte Tagesspeicher, welche die in ihnen gespeicherte Wärme wenige Tage halten können, beispielsweise zwei bis acht Tage. Tagesspeicher weisen üblicherweise ein Volumen auf, das im einstelligen Kubikmeterbereich oder geringfügig darunter liegt. Es existieren jedoch auch sogenannte saisonale Speicher, welche im Sommer aufgeheizt werden und die in ihnen gespeicherte Wärme über den Winter abgeben. Saisonale Speicher müssen erheblich größer als Tagesspeicher dimensioniert sein. Sie weisen in der Regel ein Speichervolumen von 50 m³ oder mehr auf.

Als saisonale Speicher sind die sogenannten Jenni-Häuser bekannt. Bei einem Jenni-Haus wird ein Speichergefäß aufgestellt, das eine Grundfläche von ca. 8 bis 20 m² aufweist. Das Speichergefäß ist ca. 8 bis 12 m hoch. Ein derartiger Speicher ist praktisch nur bei einem Neubau realisierbar, bei welchem das zu bauende Haus sozusagen um das Speichergefäß herum gebaut wird. Weiterhin benötigt man bei einem Jenni-Haus eine sehr starke thermisehe Isolierung des Speichers zur Umgebung (das heißt zur Wohn- und Nutzfläche des Hauses hin), da anderenfalls der Aufenthalt im Haus in den Sommermonaten unerträglich wäre.

Unabhängig davon, ob der Flüssigkeits-Wärmespeicher als Tagesspeicher oder als saisonaler Speicher ausgebildet ist, bestehen im Stand der Technik weitere Nachteile. So ist beispielsweise bei vielen Ausgestaltungen des Standes der Technik nur eine einzige Stelle vorhanden, an welcher die Speicherflüssigkeit erwärmt wird bzw. warme Speicherflüssigkeit dem Speichergefäß zugeführt wird. In diesem Fall muss die "Heizstelle", das heißt die Stelle, an welcher sich die Heizeinrichtung befindet oder die erwärmte Speicherflüssigkeit dem Speichergefäß zugeführt wird, im Bodenbereich des Speichergefäßes angeordnet sein. Denn anderenfalls könnte der untere Bereich des Speichergefäßes nicht aufgeheizt werden. In diesem Fall ist es in der Regel nicht möglich, bereits kurze Zeit nach dem Beginn des Aufheizvorgangs Wärme zu entnehmen, um Brauchwasser zu erwärmen. In der Regel muss abgewartet werden, bis der gesamte Gefäßinhalt des Speichergefäßes aufgewärmt ist. Das ist insbesondere in den Wintermonaten problematisch.

Alternativ ist es möglich, mehrere derartige "Heizstellen" und/oder ein Schichtungsrohr mit steuerbaren Leitelementen vorzusehen. In diesem Fall ergeben sich komplizierte, störanfällige und darüber hinaus teure Gestaltungen.

Aus der FR 2 533 583 A1 ist ein Flüssigkeits-Wärmespeicher bekannt, der eine Mehrzahl von geschlossenen Speichergefäßen aufweist. Die Speichergefäße sind mit einer Speicherflüssigkeit gefüllt und bodenseitig derart miteinander verbunden, dass sie eine Sequenz bilden. Das erste Speichergefäß weist eine Kreislauf-Zuführstelle auf, mindestens ein anderes der Speichergefäße eine Kreislauf-Entnahmestelle. Die Kreislauf-Entnahmestelle des anderen Speichergefäßes ist mit der Kreislauf-Zuführstelle des ersten Speichergefäßes über eine Leitung zumindest temporär verbunden. In der Leitung ist eine Pumpe angeordnet, mittels derer die Speicherflüssigkeit vom anderen Speichergefäß in das erste Speichergefäß pumpbar ist. In der Leitung ist weiterhin eine Heizeinrichtung angeordnet, mittels derer die vom anderen Speichergefäß in das erste Speichergefäß gepumpte Speicherflüssigkeit erwärmbar ist. Innerhalb der einzelnen Speichergefäße sind interne Führungsrohre angeordnet, mittels derer die dem jeweiligen Speichergefäß zugeführte Speicherflüssigkeit zwangsweise in den Deckenbereich des jeweiligen Speichergefäßes geleitet wird.

Aus dem DE 298 13 784 U1 ist ein Flüssigkeits-Wärmespeicher bekannt, der eine Mehrzahl von geschlossenen Speichergefäßen aufweist, die mit einer Speicherflüssigkeit gefüllt sind.

Der Flüssigkeits-Wärmespeicher weist eine Heizeinrichtung auf, mittels derer die in einem zentralen der Speichergefäße befindliche Speicherflüssigkeit erwärmbar ist. Die Speichergefäße sind kommunizierend miteinander verbunden.

Aus der DE 10 2005 059 029 A1 ist ein Flüssigkeits-Wärmespeicher bekannt, der eine Mehrzahl von geschlossenen Speichergefäßen aufweist, die mit einer Speicherflüssigkeit gefüllt sind. Die Speichergefäße sind nicht miteinander verbunden. Die Speichergefäße wirken derart miteinander zusammen, dass jedes Speichergefäß eine Isolierung aufweist, in der ein Heizelement angeordnet ist, welches die vom jeweiligen Speichergefäß abgestrahlte Wärme aufnimmt und dem jeweils nachgeordneten Speichergefäß zuführt.

Aus der EP 0 987 510 A2 ist ein Flüssigkeitswärmespeicher bekannt, der eine Mehrzahl von geschlossenen Speichergefäßen aufweist. Die Speichergefäße sind mit einer Speicherflüssigkeit gefüllt und derart miteinander verbunden, dass sie eine Sequenz bilden. Zumindest das erste Speichergefäß weist eine Kreislauf-Zuführstelle auf, mindestens ein anderes der Speichergefäße eine Kreislauf-Entnahmestelle. Die Kreislauf-Entnahmestelle des anderen Speichergefäßes ist mit der Kreislauf-Zuführstelle des ersten Speichergefäßes über eine Leitung verbunden. Weiterhin weist der Flüssigkeits-Wärmespeicher eine Heizeinrichtung auf.

Die Aufgabe der vorliegenden Erfindung besteht darin, einen Flüssigkeits-Wärmespeicher zu schaffen, der einfach aufgebaut ist, zuverlässig arbeitet und dennoch auf einfache Weise insbesondere eine schnelle Brauchwassererwärmung ermöglicht.

Die Aufgabe wird durch einen Flüssigkeits-Wärmespeicher mit den Merkmalen des Anspruchs 1 gelöst. Vorteilhafte Ausgestaltungen des erfindungsgemäßen Flüssigkeits-Wärmespeichers sind Gegenstand der abhängigen Ansprüche 2 bis 14.

Erfindungsgemäß weist der Flüssigkeits-Wärmespeicher eine Mehrzahl von geschlossenen Speichergefäßen auf. Die Speichergefäße sind mit einer Speicherflüssigkeit gefüllt. Die Speichergefäße sind bodenseitig derart miteinander verbunden, dass sie eine Sequenz bilden. Zumindest das erste Speichergefäß weist eine Kreislauf-Zuführstelle auf, mindestens ein anderes der Speichergefäße eine Kreislauf-Entnahmestelle. Die Kreislauf-Entnahmestelle des anderen Speichergefäßes ist mit der Kreislauf-Zuführstelle des ersten Speichergefäßes über eine Leitung zumindest temporär verbunden. In der Leitung ist eine Pumpe angeordnet, mittels derer die Speicherflüssigkeit vom anderen Speichergefäß in das erste Speichergefäß pumpbar ist. Der Flüssigkeits-Wärmespeicher weist eine Heizeinrichtung auf, mittels derer die vom anderen Speichergefäß in das erste Speichergefäß gepumpte Speicherflüssigkeit erwärmbar ist. Das andere Speichergefäß und etwaige in der Sequenz von Speichergefäßen zwischen dem ersten und dem anderen Speichergefäß angeordnete Speichergefäße sind derart ausgebildet, dass die über die jeweilige bodenseitige Verbindung in das jeweilige Speichergefäß geförderte Speicherflüssigkeit in dem Fall, dass sie wärmer als die bereits im jeweiligen Speichergefäß befindliche Speicherflüssigkeit ist, in dem jeweiligen Speichergefäß nach oben steigt, bis sie den Deckenbereich des jeweiligen Speichergefäßes erreicht oder auf eine Schicht der Speicherflüssigkeit stößt, welche die gleiche Temperatur aufweist. Anderenfalls verbleibt die in das jeweilige Speichergefäß geförderte Speicherflüssigkeit im Bodenbereich des jeweiligen Speichergefäßes.

Bereits durch diese Ausgestaltung wird erreicht, dass sich in jedem Speichergefäß im Wesentlichen unabhängig von den anderen Speichergefäße jeweils eine eigene Wärmeschichtung aufbauen kann. Die Speicherflüssigkeit, die im Rahmen des obenstehend beschriebenen Flüssigkeitskreislaufes über die bodenseitigen Verbindungen aus einem der Speichergefäße entnommen wird, wird aus dem Bodenbereich des jeweiligen Speichergefäßes entnommen, an dem sich der kälteste Teil der Speicherflüssigkeit des jeweiligen Speichergefäßes befindet. Selbst im ungünstigsten Fall, der bei vielen der nachfolgend erläuterten vorteilhaften Ausgestaltungen vermieden wird, muss daher nur die im ersten Speichergefäß befindliche Speicherflüssigkeit durchgewärmt werden, um Brauchwasser erwärmen zu können. Steuerelemente, Sensoren usw. können zum Großteil entfallen, da sich der kälteste Teil der Speicherflüssigkeit bei jedem Speichergefäß ganz von selbst auf Grund seiner höheren Dichte im Bodenbereich des jeweiligen Speichergefäßes ansammelt.

Wenn beispielsweise die Heizleistung einer Solaranlage oder eines Blockheizkraftwerkes ausreicht, um die in das erste Speichergefäß fließende Speicherflüssigkeit über die Temperatur zu erwärmen, welche die die Kreislauf-Zuführstelle des ersten Speichergefäßes umgebende Speicherflüssigkeit aufweist, so steigt die zugeführte (voraussetzungsgemäß wärmere) Speicherflüssigkeit im ersten Speichergefäß nach oben, bis sie entweder den Deckenbereich des ersten Speichergefäßes erreicht oder auf eine Flüssigkeitsschicht gleicher Temperatur trifft. Alle kälteren Schichten werden nach unten verdrängt, ohne eine bestehende Wärmeschichtung zu zerstören. Wenn die zugeführte (voraussetzungsgemäß warme) Speicherflüssigkeit bis zum Deckenbereich des ersten Speichergefäßes aufsteigt, wird im Ergebnis die Temperatur der obersten Schicht der im ersten Speichergefäß befindlichen Speicherflüssigkeit erhöht. Anderenfalls wird die Temperatur der obersten Schicht zwar nicht erhöht, die Schicht wird jedoch auch nicht verdrängt oder zerstört. Wenn umgekehrt die Heizleistung der Solaranlage oder des Blockheizkraftwerks nicht ausreicht, um die in das erste Speichergefäß fließende Speicherflüssigkeit über die Temperatur zu erwärmen, welche die im ersten Speichergefäß befindliche Speicherflüssigkeit in der Umgebung der Kreislauf-Zuführstelle des ersten Speichergefäßes aufweist, so sinkt die zugeführte (voraussetzungsgemäß kältere) Speicherflüssigkeit nach unten, bis sie entweder den Bodenbereich des ersten Speichergefäßes erreicht oder auf eine Flüssigkeitsschicht gleicher Temperatur trifft. Aus dem ersten Speichergefäß abgezogen wird in jedem Fall jedoch die kälteste Speicherflüssigkeit des ersten Speichergefäßes, also entweder die zugeführte Speicherflüssigkeit, wenn diese zu kalt ist, oder die kälteste Schicht der bereits im ersten Speichergefäß befindlichen Speicherflüssigkeit.

In analoger Weise verdrängt die bodenseitig vom ersten in das zweite Speichergefäß überführte Speicherflüssigkeit dort alle Flüssigkeitsschichten, die kälter als die vom ersten zum zweiten Speichergefäß überführte Speicherflüssigkeit sind. Wenn die überführte Speicherflüssigkeit zu kalt ist, um die im zweiten Speichergefäß befindliche Speicherflüssigkeit zu verdrängen, wird sie einfach durch das zweite Speichergefäß zum dritten Speichergefäß weitergeleitet. Ein analoger Vorgang erfolgt auch in den weiteren Speichergefäßen bis zu dem Speichergefäß, welches die Kreislauf-Entnahmestelle aufweist, die gerade mit der Kreislauf-Zuführstelle des ersten Speichergefäßes verbunden ist.

In der Regel ist die Heizeinrichtung als Wärmetauscher ausgebildet. Der Begriff "Wärmetauscher" bezeichnet hierbei eine Einrichtung, bei der eine warme Flüssigkeit ihre Temperatur an eine kältere Flüssigkeit abgibt bzw. umgekehrt die kältere Flüssigkeit durch die wärmere Flüssigkeit erwärmt wird.

Die Heizeinrichtung kann außerhalb der Speichergefäße angeordnet sein. Beispielsweise kann die Heizeinrichtung als Solaranlage oder als Blockheizkraftwerk ausgebildet sein. In diesem Fall wird die dem ersten Speichergefäß zugeführte Speicherflüssigkeit vor dem Zuführen zum ersten Speichergefäß erwärmt.

Alternativ ist es möglich, dass die Heizeinrichtung innerhalb des ersten Speichergefäßes angeordnet ist. Auch in diesem Fall kann die dem ersten Speichergefäß zugeführte Speicherflüssigkeit vor dem Zuführen zum ersten Speichergefäß erwärmt werden. Es wird in diesem Fall also die Speicherflüssigkeit erwärmt, noch bevor sie in das erste Speichergefäß eintritt. Alternativ ist es jedoch möglich, dass mittels der Heizeinrichtung innerhalb des ersten Speichergefäßes die in der Nähe der Kreislauf-Zuführstelle des ersten Speichergefäßes befindliche Speicherflüssigkeit erwärmt wird, so dass die in das erste Speichergefäß fließende Speicherflüssigkeit nach dem Zuführen zum ersten Speichergefäß erwärmt wird. Diese letztgenannte Ausgestaltung ist bevorzugt.

Der Vorteil der letztgenannten Ausgestaltung besteht darin, dass die im ersten Speichergefäß befindliche Speicherflüssigkeit mittels der Heizeinrichtung erwärmbar ist, ohne die in den anderen Speichergefäßen befindliche Speicherflüssigkeit durchwärmen zu müssen.

Beim ersten Speichergefäß ist bevorzugt, dass die Kreislauf-Zuführstelle in Höhenrichtung gesehen in etwa mittig des ersten Speichergefäßes angeordnet ist.

Die Kreislauf-Entnahmestelle des anderen Speichergefäßes kann nach Bedarf angeordnet sein. Insbesondere kann sie im Deckenbereich des anderen Speichergefäßes angeordnet sein. Diese Ausgestaltung kann insbesondere dann sinnvoll sein, wenn das andere Speichergefäß ein vom letzten Speichergefäß der Sequenz verschiedenes Speichergefäß ist.

Im Falle der letztgenannten Ausgestaltung ist bevorzugt, dass das andere Speichergefäß eine weitere Kreislauf-Entnahmestelle aufweist, die über die Pumpe oder eine andere Pumpe mit einer Kreislauf-Zuführstelle eines dem anderen Speichergefäß in der Sequenz von Speichergefäßen nachgeordneten Speichergefäßes zumindest temporär verbunden ist. Im Falle dieser Ausgestaltung kann im laufenden Betrieb des Flüssigkeits-Wärmespeichers ein Zuschalten des dem anderen Speichergefäß nachgeordneten Speichergefäßes (und gegebenenfalls der zwischen diesen beiden Speichergefäßen liegenden Speichergefäße) erfolgen, wenn das andere Speichergefäß seine volle Betriebstemperatur erreicht hat.

Die Kreislauf-Zuführstelle des nachgeordneten Speichergefäßes ist vorzugsweise im Deckenbereich des nachgeordneten Speichergefäßes angeordnet. Dadurch wird bewirkt, dass die vom anderen Speichergefäß zugeführte warme Speicherflüssigkeit im Deckenbereich des nachgeordneten Speichergefäßes eingelagert wird und die im nachgeordneten Speichergefäß befindliche kalte Speicherflüssigkeit aus dessen Bodenbereich abgezogen wird.

In einer weiter bevorzugten Ausgestaltung weist das nachgeordnete Speichergefäß in seinem Deckenbereich ebenfalls eine Kreislauf-Entnahmestelle auf, die über die Pumpe oder eine andere Pumpe mit einer Kreislauf-Zuführstelle eines dem nachgeordneten Speichergefäß in der Sequenz von Speichergefäßen vorgeordneten Speichergefäßes, insbesondere des ersten oder des anderen Speichergefäßes, zumindest temporär verbunden ist. Durch diese Ausgestaltung ist auf einfache Weise ein Entladen des nachgeordneten Speichergefäßes möglich, also ein Entnehmen der dort gespeicherten warmen Speicherflüssigkeit.

In einer bevorzugten Ausgestaltung des erfindungsgemäßen Flüssigkeits-Wärmespeichers ist vorgesehen, dass der Flüssigkeits-Wärmespeicher eine einstückige Außenhülle aufweist, dass die Außenhülle die Außenwand des zweiten und des dritten Speichergefäßes bildet, dass in der Außenhülle eine vertikal verlaufende Trennwand angeordnet ist, dass die Trennwand das zweite und das dritte Speichergefäß voneinander trennt und dass das erste Speichergefäß innerhalb des zweiten Speichergefäßes angeordnet ist. Dadurch ist es beispielsweise möglich, den Flüssigkeits-Wärmespeicher als Baueinheit vorzufertigen und als Ganzes zu liefern und aufzustellen. Er muss nach dem Liefern und Aufstellen nur noch mit der Speicherflüssigkeit (in der Regel Wasser) befüllt und angeschlossen werden.

Vorzugsweise ist die Trennwand vom Boden der Außenhülle beabstandet, so dass durch die Beabstandung die bodenseitige Verbindung des zweiten und des dritten Speichergefäßes miteinander gebildet ist. Durch diese Ausgestaltung ist die bodenseitige Verbindung auf einfache Weise herstellbar.

Die Außenhülle besteht vorzugsweise aus einem Kunststoff, insbesondere aus einem glasfaserverstärkten Kunststoff. Dadurch ergibt sich eine hohe Standzeit der Außenhülle.

Vorzugsweise weist die Außenhülle horizontal eine größere Erstreckung auf als vertikal. Dadurch ist die Außenhülle leicht aufstellbar und steht stabil, weil sie liegend und nicht stehend angeordnet ist. Die Stabilität ergibt sich hierbei unabhängig davon, ob die Außenhülle überirdisch oder unterirdisch angeordnet ist.

Die Trennwand kann innerhalb der Außenhülle nach Bedarf angeordnet sein. Vorzugsweise ist die Trennwand in Horizontalrichtung gesehen außermittig angeordnet, so dass das dritte Speichergefäß ein größeres Volumen aufweist als das zweite Speichergefäß. Sie kann aus einem Dämmmaterial bestehen, beispielsweise aus Polyurethanschaum.

Die Außenhülle ist vorzugsweise von einer Dämmschicht umgeben. Die Dicke der Dämmschicht - kann nach Bedarf gewählt sein. In der Regel wird sie mindestens 50 mm betragen. Die Dämmschicht kann als Schüttung ausgebildet sein, beispielsweise als Schüttung aus Blähtonkugeln oder dergleichen. Oftmals wird die Dämmschicht jedoch als formstabile Schäumung ausgebildet sein. Vorzugsweise ist in diesem Fall auf die formstabile Schäumung außen eine Schutzschicht aufgebracht. Die Schutzschicht kann insbesondere aufgespritzt sein. Die Schutzschicht ist vorzugsweise witterungsbeständig, reiß- und abriebfest sowie wasserdicht und wasserresistent.

In den meisten Fällen weist die Außenhülle im Bereich des zweiten Speichergefäßes an ihrer Oberseite eine Zugangsöffnung auf, die ihrerseits einen Öffnungsquerschnitt aufweist. Beispielsweise kann die Außenhülle an ihrer Oberseite einen angeformten Stutzen aufweisen, der ein Mannloch bildet. Vorzugsweise weist das erste Speichergefäß horizontal gesehen einen Gefäßquerschnitt auf, der kleiner als der Öffnungsquerschnitt ist. Dadurch ist es möglich, das erste Speichergefäß und einen Großteil der Verrohrung und die Wärmetauscher vorzumontieren und als Einheit im zweiten Speichergefäß anzuordnen.

Das erste Speichergefäß ist vom zweiten Speichergefäß durch eine Zwischenhülle getrennt. Die Zwischenhülle kann aus einem Dämmmaterial bestehen, beispielsweise aus Polyurethanschaum.

In einer bevorzugten Ausgestaltung weist das erste Speichergefäß vertikal eine größere Erstreckung auf als horizontal. Das erste Speichergefäß ist also vorzugsweise - im Gegensatz zur Außenhülle - stehend (oder vielmehr hängend) angeordnet.

Weitere Vorteile und Einzelheiten ergeben sich aus der nachfolgenden Beschreibung von Ausführungsbeispielen in Verbindung mit den Zeichnungen. Es zeigen in Prinzipdarstellung
- Figuren 1 und 2: je eine Ausgestaltung eines erfindungsgemäßen Flüssigkeits-Wärmespeichers,
- Figuren 3 und 4: mögliche Anordnungen von Speichergefäßen,
- Figur 5: eine modifizierte Darstellung des Flüssigkeits-Wärmespeichers von Figur 1,
- Figur 6: eine erweiterte Darstellung zweier Speichergefäße des Flüssigkeits-Wärmespeichers,
- Figur 7: eine weitere Ausgestaltung eines erfindungsgemäßen Flüssigkeits-Wärmespeichers,
- Figur 8: eine Seitenansicht einer möglichen Ausgestaltung eines erfindungsgemäßen Flüssigkeits-Wärmespeichers,
- Figur 9: eine Frontansicht des Flüssigkeits-Wärmespeichers von Figur 8 und
- Figur 10: eine Draufsicht auf den Flüssigkeits-Wärmespeicher von Figur 8.

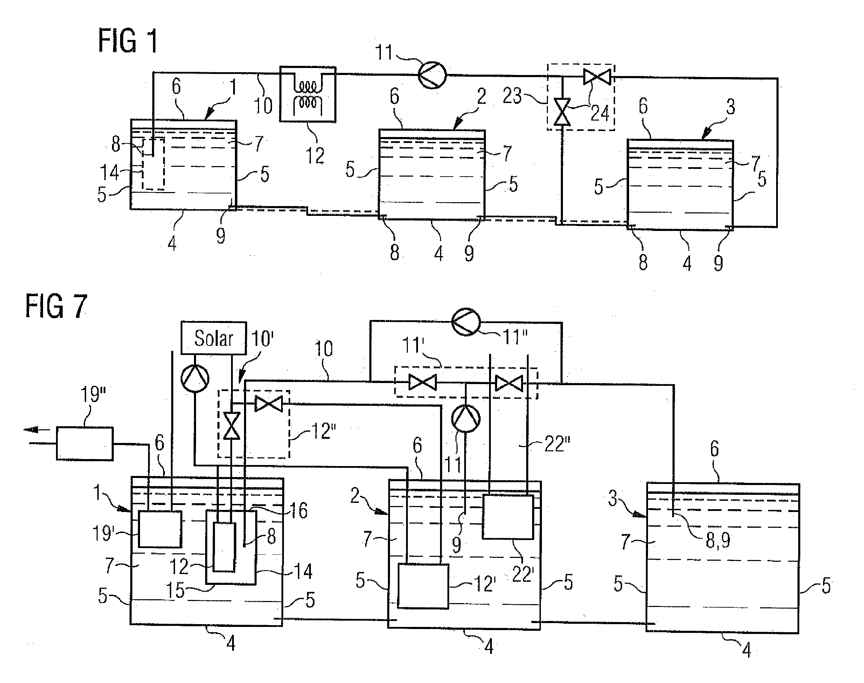

Gemäß Figur 1 weist ein Flüssigkeits-Wärmespeicher eine Mehrzahl von Speichergefäßen 1, 2, 3 auf. Die Minimalanzahl an Speichergefäßen 1, 2, 3 beträgt zwei. Normalerweise sind drei oder vier derartiger Speichergefäße 1, 2, 3 vorhanden. Im Einzelfall können auch mehr Speichergefäße 1, 2, 3 vorhanden sein.

Die Speichergefäße 1, 2, 3 sind geschlossen, weisen also nicht nur einen jeweiligen Boden 4 und jeweilige Seitenwände 5 auf, sondern auch eine jeweilige Decke 6. Die Speichergefäße 1, 2, 3 sind mit einer Speicherflüssigkeit 7 gefüllt, die in der Lage ist, Wärme zu speichern. In der Regel handelt es sich bei der Speicherflüssigkeit 7 um Wasser. Es ist aber auch denkbar, eine andere Flüssigkeit als Speicherflüssigkeit 7 zu verwenden, beispielsweise ein Öl oder ein Flüssigmetall. Die Decken 6 der Speichergefäße 1, 2, 3 können, wie in Figur 1 dargestellt, fest montiert sein. Alternativ können die Decken 6 als Abdeckungen ausgebildet sein, die auf der Speicherflüssigkeit 7 angeordnet sind. Beispielsweise kann es sich um Styroporplatten oder um Abdeckplanen handeln. Entscheidend ist, dass die Speichergefäße 1, 2, 3 nach oben nicht offen sind, da anderenfalls zu große Wärmeverluste auftreten würden.

Die Bauform der Speichergefäße 1, 2, 3 kann nach Bedarf gewählt werden. In der Regel weisen sie (horizontal gesehen) einen rechteckigen oder einen zylindrischen Querschnitt auf. Ein rechteckiger Querschnitt weist den Vorteil auf, dass er zumeist bautechnisch leichter zu realisieren ist. Ein kreisförmiger Querschnitt ergibt bei gleichem Umfang eine optimierte Querschnittsfläche. In Höhenrichtung gesehen ist der Querschnitt in der Regel konstant. Auch dies ist jedoch nicht zwingend. Beispielsweise können die Speichergefäße 1, 2, 3 liegende Zylinder sein.

Die Speichergefäße 1, 2, 3 sind bodenseitig miteinander verbunden, so dass die Speicherflüssigkeit 7 bodenseitig von jedem der Speichergefäße 1, 2, 3 in die jeweils unmittelbar benachbarten Speichergefäße 1, 2, 3 fließen kann. Auf Grund ihrer bodenseitigen Verbindung miteinander bilden die Speichergefäße 1, 2, 3 eine Sequenz.

Zumindest das erste Speichergefäß 1 weist eine Kreislauf-Zuführstelle 8 auf. Mindestens ein anderes der Speichergefäße 1, 2, 3 - gemäß der Ausgestaltung von Figur 1 das letzte Speichergefäß 3 - weist eine Kreislauf-Entnahmestelle 9 auf. Die Kreislauf-Entnahmestelle 9 des anderen Speichergefäßes 3 ist mit der Kreislauf-Zuführstelle 8 des ersten Speichergefäßes 1 zumindest temporär verbunden.

Gemäß einer bevorzugten Ausgestaltung, die in Figur 1 so dargestellt ist, ist die Kreislauf-Zuführstelle 8 des ersten Speichergefäßes 1 in Höhenrichtung gesehen in etwa mittig des ersten Speichergefäßes 1 angeordnet. Die Kreislauf-Entnahmestelle 9 des anderen Speichergefäßes 3 ist bei der Ausgestaltung des Flüssigkeits-Wärmespeichers gemäß Figur 1 im Bodenbereich des anderen Speichergefäßes 3 angeordnet. Sie könnte alternativ im Deckenbereich oder in etwa mittig des anderen Speichergefäßes 3 angeordnet sein.

Die Bodenbereiche der Speichergefäße 1, 2, 3 sind in der Reihenfolge der Sequenz gesehen vorzugsweise niveaugleich oder absteigend angeordnet. Der Bodenbereich des zweiten Speichergefäßes 2 befindet sich in diesem Fall auf der gleichen Höhenlage wie der Bodenbereich des ersten Speichergefäßes 1 oder darunter. Ebenso befindet sich in diesem Fall der Bodenbereich des dritten Speichergefäßes 3 auf der Höhenlage des zweiten Speichergefäßes 2 oder darunter usw..

Die Kreislauf-Entnahmestelle 9 des letzten Speichergefäßes 3 ist mit der Kreislauf Zufiihrstelle 8 des ersten Speichergefäßes 1 - in der Regel über eine Leitung 10 - verbunden. In der Leitung 10 eine Pumpe 11 angeordnet, mittels derer die Speicherflüssigkeit 7 durch die Leitung 10 hindurch pumpbar ist.

Der Flüssigkeits-Wärmespeicher weist eine Heizeinrichtung 12 auf. Mittels der Heizeinrichtung 12 ist die Speicherflüssigkeit 7 erwärmbar, die vom letzten Speichergefäß 3 in das erste Speichergefäß 1 fließt. Die Heizeinrichtung 12 kann nach Bedarf ausgebildet sein. In der Regel ist die Heizeinrichtung 12 als Wärmetauscher ausgebildet, das heißt, dass die Speicherflüssigkeit 7 durch Aufnahme der Wärme einer anderen Flüssigkeit erwärmt wird. Beispiele derartiger Wärmetauscher sind Sonnenkollektoren. Bei der Ausgestaltung gemäß Figur 1 ist die Heizeinrichtung 12 außerhalb der Speichergefäße 1, 2, 3 angeordnet. In diesem Fall wird die die Leitung 10 durchfließende Speicherflüssigkeit 7 erwärmt, also noch vor dem Zuführen zum ersten Speichergefäß 1.

Der Flüssigkeits-Wärmespeicher gemäß der Ausgestaltung von Figur 1 arbeitet wie folgt:

Die Speicherflüssigkeit 7 wird aus dem letzten Speichergefäß 3 abgezogen. Die abgezogene Speicherflüssigkeit 7 wird der Heizeinrichtung 12 zugeführt. In der Heizeinrichtung 12 wird die Speicherflüssigkeit 7 erwärmt. Sodann wird die Speicherflüssigkeit 7 dem ersten Speichergefäß 1 zugeführt.

Wenn die Temperatur der dem ersten Speichergefäß 1 zugeführten Speicherflüssigkeit 7 größer als die Temperatur der Speicherflüssigkeit 7 in der Umgebung der Kreislauf Zufiihrstelle 8 des ersten Speichergefäßes 1 ist, weist die zugeführte Speicherflüssigkeit 7 eine (wenn auch nur geringfügig) geringere Dichte als die sie umgebende Speicherflüssigkeit 7 auf. Sie steigt daher im ersten Speichergefäß 1 nach oben, bis sie entweder auf eine Wärmeschicht mit der gleichen Temperatur stößt oder den Deckenbereich des ersten Speichergefäßes 1 erreicht. Gleichzeitig werden alle kälteren Temperaturschichten der Speicherflüssigkeit 7 innerhalb des ersten Speichergefäßes 1 nach unten verdrängt. Die unterste und damit kälteste Schicht der Speicherflüssigkeit 7 wird aus dem ersten Speichergefäß 1 abgezogen und dem zweiten Speichergefäß 2 zugeführt.

Wenn die Temperatur der dem ersten Speichergefäß 1 zugeführten Speicherflüssigkeit 7 kleiner als die Temperatur der Speicherflüssigkeit 7 in der Umgebung der Kreislauf-Zuführstelle 8 des ersten Speichergefäßes 1 ist, weist die zugeführte Speicherflüssigkeit 7 eine (wenn auch nur geringfügig) größere Dichte als die sie umgebende Speicherflüssigkeit 7 auf. Die zugeführte Speicherflüssigkeit 7 sinkt daher innerhalb des ersten Speichergefäßes 1 nach unten, bis sie entweder auf eine Schicht gleicher Temperatur trifft oder den Bodenbereich des ersten Speichergefäßes 1 erreicht. In dem Fall, dass die zugeführte Speicherflüssigkeit 7 beim Absinken auf eine Schicht gleicher Temperatur stößt, verdrängt sie alle kälteren Schichten der Speicherflüssigkeit 7 innerhalb des ersten Speichergefäßes 1 nach unten. Die im Bodenbereich befindliche Speicherflüssigkeit 7 (und damit die kälteste Speicherflüssigkeit 7) wird aus dem ersten Speichergefäß 1 abgezogen und dem zweiten Speichergefäß 2 zugeführt.

Aus den obigen Ausführungen ist ersichtlich, dass die dem ersten Speichergefäß 1 zugeführte Speicherflüssigkeit 7 sich innerhalb des ersten Speichergefäßes 1 stets "korrekt" einlagert und weiterhin aus dem ersten Speichergefäß 1 stets die kälteste Speicherflüssigkeit 7 abgezogen und dem zweiten Speichergefäß 2 zugeführt wird.

Im zweiten und weiteren Speichergefäßen 2, 3 erfolgt ein analoger Vorgang. Wenn die dem jeweiligen Speichergefäß 2, 3 zugeführte Speicherflüssigkeit 7 wärmer als die sie umgebende Speicherflüssigkeit 7 ist, steigt sie nach oben, bis sie entweder den Deckenbereich des jeweiligen Speichergefäßes 2, 3 erreicht oder auf eine Schicht stößt, in welcher die Speicherflüssigkeit 7 dieselbe Temperatur aufweist. Gleichzeitig werden alle darunter liegenden, kälteren Schichten der Speicherflüssigkeit 7 des jeweiligen Speichergefäßes 2, 3 nach unten verdrängt. Die jeweils kälteste Speicherflüssigkeit 7 - das kann im Einzelfall die dem jeweiligen Speichergefäß 2, 3 zugeführte Speicherflüssigkeit 7 sein - wird aus dem jeweiligen Speichergefäß 2, 3 abgezogen.

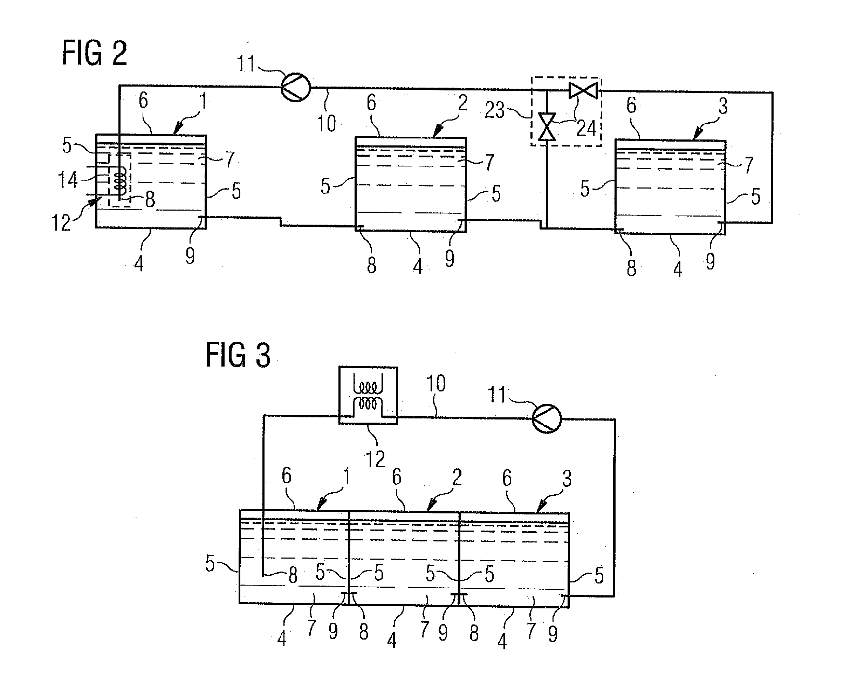

Die Ausgestaltung und die Wirkungsweise des Flüssigkeits-Wärmespeichers der Figur 2 ist im Wesentlichen ebenso wie bei dem Flüssigkeits-Wärmespeicher von Figur 1. Nachstehend werden daher nur die Unterschiede näher erläutert.

Bei der Ausgestaltung gemäß Figur 2 ist die Heizeinrichtung 12 innerhalb des ersten Speichergefäßes 1 angeordnet, und zwar im Bereich der Kreislauf-Zuführstelle 8 des ersten Speichergefäßes 1. Bei dieser Ausgestaltung wird daher die Speicherflüssigkeit 7, die in das erste Speichergefäß 1 fließt, erst dann erwärmt, wenn sie sich in einem Leitungsabschnitt 13 befindet, der innerhalb des ersten Speichergefäßes 1 verläuft, oder wenn sie aus der Leitung 10 bereits ausgetreten ist. Diese Ausgestaltung weist den Vorteil auf, dass - im funktionalen Sinn - ein Abkoppeln des ersten Speichergefäßes 1 von den übrigen Speichergefäßen 2, 3 möglich ist. Denn der Flüssigkeits-Wärmespeicher von Figur 2 ist - selbstverständlich - analog zum Flüssigkeits-Wärmespeicher von Figur 1 mit eingeschalteter Pumpe 11 betreibbar. In diesem Fall ist die Wirkungsweise des Flüssigkeits-Wärmespeichers von Figur 2 so, wie dies obenstehend in Verbindung mit Figur 1 bereits erläutert wurde. Zusätzlich ist es jedoch möglich, die Pumpe 11 abzuschalten. Bei abgeschalteter Pumpe 11 fließt keine (oder zumindest nur sehr wenig) Speicherflüssigkeit 7 durch die Leitung 10. Die Heizeinrichtung 12 gibt in diesem Fall - also bei abgeschalteter Pumpe 11 - ihre Wärme direkt an die bereits im ersten Speichergefäß 1 befindliche Speicherflüssigkeit 7 ab. Die im ersten Speichergefäß 1 befindliche Speicherflüssigkeit 7 wird daher ohne Umweg über das zweite und gegebenenfalls weitere Speichergefäße 2, 3 erwärmt. Die im Bodenbereich des ersten Speichergefäßes 1 befindliche Speicherflüssigkeit 7 wird also nicht aus dem ersten Speichergefäß 1 abgezogen, sondern verbleibt im ersten Speichergefäß 1.

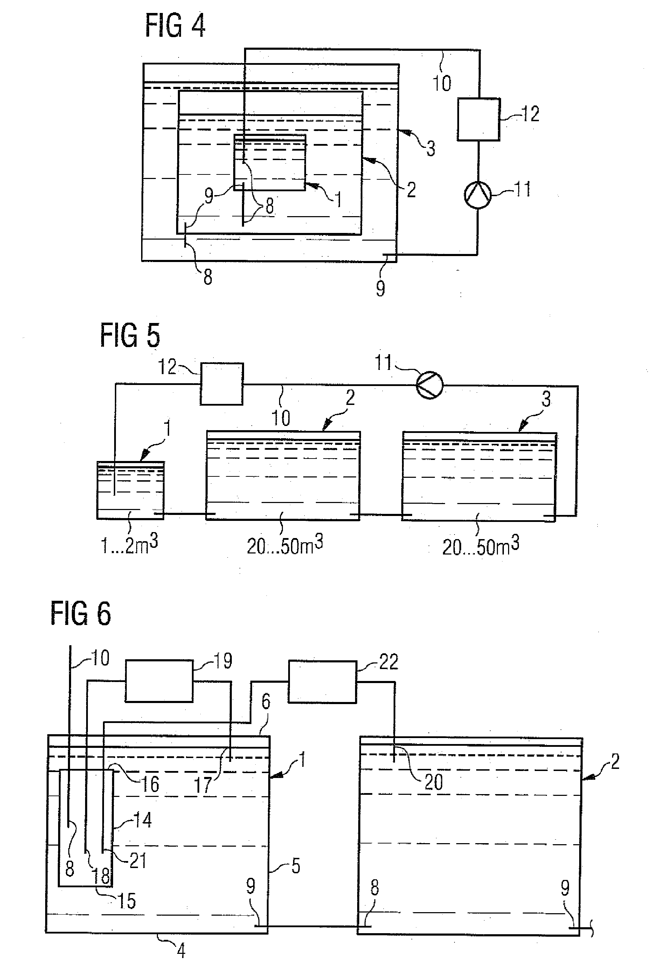

Die Speichergefäße 1, 2, 3 des Flüssigkeits-Wärmespeichers können, wie in den Figuren 1 und 2 dargestellt, voneinander beabstandet angeordnet sein. Gleichermaßen können die Speichergefäße 1, 2, 3 entsprechend der Darstellung von Figur 3 aneinander angrenzend angeordnet sein. Bevorzugt ist entsprechend der Darstellung von Figur 4, dass die Speichergefäße 1, 2, 3 - zumindest teilweise - ähnlich dem sogenannten Matrioschka-Prinzip (= Puppe in der Puppe) ineinander angeordnet sind. Insbesondere ist bevorzugt, dass das erste Speichergefäß 1 innerhalb des zweiten Speichergefäßes 2 angeordnet ist. Gegebenenfalls kann zusätzlich das zweite Speichergefäß 2 innerhalb des dritten Speichergefäßes 3 angeordnet sein. Alternativ können das zweite und das dritte Speichergefäß 2, 3 nebeneinander (insbesondere aneinander angrenzend) angeordnet sein. Auf Grund der Verschachtelung der Speichergefäße 1, 2, 3 ineinander wird nach außen abgegebenen Verlustwärme eines inneren Speichergefäßes 1, 2 von der Speicherflüssigkeit 7 des umgebenden Speichergefäßes 2, 3 aufgenommen. Die Gesamtverluste können daher minimiert werden.
Wenn das erste Speichergefäß 1 innerhalb des zweiten Speichergefäßes 2 angeordnet ist, ist weiterhin bevorzugt, dass das erste Speichergefäß 1 einen kleineren Querschnitt (und eventuell auch eine geringere Bauhöhe) aufweist als das zweite Speichergefäß 2. Dadurch ist es möglich, dass die Seitenwände 5 des ersten Speichergefäßes 1 von den Seitenwänden 5 des zweiten Speichergefäßes 2 beabstandet sind und eventuell auch der Boden 4 und/oder die Decke 6 des ersten Speichergefäßes 1 vom Boden 4 bzw. der Decke 6 des zweiten Speichergefäßes 2 beabstandet sind. Dadurch können Wärmeverluste noch weiter reduziert werden.

Wenn die Speichergefäße 1, 2, 3 aneinander angrenzend oder ineinander verschachtelt angeordnet sind, ist es nicht zwingend erforderlich, dass die Seitenwände 5 der Speichergefäße 1, 2, 3 voneinander verschiedene Elemente sind. Beispielsweise kann die Trennung der Speichergefäße 1, 2 voneinander durch eine gemeinsame Trennwand realisiert sein, die bodenseitig einen geringen Spalt übrig lässt.

Die Speichergefäße 1, 2, 3 können - theoretisch - untereinander die gleichen wirksamen Gefäßvolumina aufweisen. Vorzugsweise jedoch weist das erste Speichergefäß 1 entsprechende der Darstellung von Figur 5 ein erheblich kleineres Gefäßvolumen auf als die anderen Speichergefäße 2, 3. Der Begriff "erheblich kleiner" bezeichnet hierbei eine Größenordnung, also den Faktor 10. Insbesondere kann beispielsweise das Gefäßvolumen des ersten Speichergefäßes 1 maximal 2 m³ betragen. Die Gefäßvolumina der anderen Speichergefäße 2, 3 betragen vorzugsweise einzeln mindestens 20 m³ und/oder zusammen mindestens 50 m³. Beispielsweise können - entsprechend der Darstellung der Figuren 1 bis 5 insgesamt drei Speichergefäße 1, 2, 3 vorhanden sein, wobei das erste Speichergefäß 1 ein Gefäßvolumen von ca. 1 m³ bis 1,5 m³ aufweist und das zweite und das dritte Speichergefäß 2, 3 untereinander in etwa gleich groß sind und jeweils etwa 40 m³ bis 50 m³ aufweisen.

Der Umstand, dass das erste Speichergefäß 1 ein erheblich kleineres Gefäßvolumen aufweist als die anderen Speichergefäße 2, 3, erleichtert insbesondere die Anordnung des ersten Speichergefäßes 1 innerhalb des zweiten Speichergefäßes 2. Die Eigenschaft, dass das erste Speichergefäß 1 ein erheblich kleineres Gefäßvolumen aufweist als die anderen Speichergefäße 2, 3, ist aber auch dann sinnvoll, wenn die Speichergefäße 1, 2, 3 aneinander angrenzend oder voneinander beabstandet angeordnet sind. Insbesondere trägt diese Ausgestaltung dem Umstand Rechnung, dass die im ersten Speichergefäß 1 befindliche Speicherflüssigkeit 7 in der Regel zur Erwärmung von Brauchwasser verwendet wird. Zur Erwärmung von Brauchwasser wird zwar nur eine relativ geringe Menge an Speicherflüssigkeit 7 benötigt. Die benötigte Menge an Speicherflüssigkeit 7 muss aber relativ warm sein. Vor allem sollte sie nach Beginn des Aufwärmvorgangs sehr rasch zur Verfügung stehen. Die im zweiten und nachfolgenden Speichergefäßen 2, 3 befindliche Speicherflüssigkeit 7 wird hingegen in der Regel zu Heizzwecken verwendet. Zum Heizen werden (insbesondere im Verlauf des gesamten Winters) erheblich größere Mengen an Speicherflüssigkeit 7 benötigt, deren Aufheizen sich auch über einen längeren Zeitraum erstrecken kann.

Wie bereits erwähnt, können die Speichergefäße 1, 2, 3 voneinander beabstandet angeordnet sein. In diesem Fall weisen die Speichergefäße 1, 2, 3 vorzugsweise Isolierschichten auf, mittels derer sie gegenüber ihrer Umgebung isoliert sind. Besonders wichtig ist die Isolierung des ersten und des zweiten Speichergefäßes 1, 2.

Ebenso ist es möglich, die Speichergefäße 1, 2, 3 nebeneinander oder ineinander verschachtelt anzuordnen. In diesem Fall können die Speichergefäße 1, 2, 3 - gegebenenfalls zusätzlich zu einer Isolierung gegenüber ihrer Umgebung - gegeneinander thermisch isoliert sein.

Das Ausmaß, in dem die Speichergefäße 1, 2, 3 isoliert werden, kann von Speichergefäß 1, 2, 3 zu Speichergefäß 1, 2, 3 verschieden sein. Insbesondere bei einer Anordnung der Speichergefäße 1, 2, 3 derart, das jedes Speichergefäß 1, 2, 3 an die Umgebung angrenzt, sollte die entsprechende Isolierung des ersten Speichergefäßes 1 am stärksten sein, die des zweiten Speichergefäßes 2 am zweitstärksten usw.. Bei Anordnung der Speichergefäße 1, 2, 3 ineinander kann es ausreichen, nur das äußerste Speichergefäß 2 bzw. 3 zu isolieren. Auch hier ist eine Isolierung der Speichergefäße 1, 2, 3 gegeneinander jedoch möglich.

Wie ebenfalls bereits erwähnt, soll insbesondere die im ersten Speichergefäß 1 befindliche Speicherflüssigkeit 7 schnell erwärmt werden können. Oftmals reicht es sogar aus, nur die im oberen Teil des ersten Speichergefäßes 1 befindliche Speicherflüssigkeit 7 (beispielsweise die oberen 10 bis 25 %) schnell erwärmen zu können. Aus diesem Grund ist entsprechend der Darstellung von Figur 6 vorzugsweise vorgesehen, dass die Kreislauf-Zuführstelle 8 des ersten Speichergefäßes 1 von einem Schichtungsrohr 14 umgeben ist. Das Schichtungsrohr 14 kann bei jeder der Ausgestaltungen gemäß der Figuren 1 und 2 (und selbstverständlich auch der Figuren 3 bis 5) vorhanden sein. In die Figuren 1 und 2 ist das Schichtungsrohr 14 gestrichelt eingezeichnet.

Das Schichtungsrohr 14 weist ein unteres Ende 15 und ein oberes Ende 16 auf. Das untere Ende 15 des Schichtungsrohres 14 ist in Höhenrichtung des ersten Speichergefäßes 1 gesehen vom Boden 4 des ersten Speichergefäßes 1 beabstandet. Der Abstand ist vorzugsweise derart bestimmt, dass sich unterhalb des unteren Endes 15 maximal ca. 10 bis 25 % der gesamten im ersten Speichergefäß 1 befindlichen Speicherflüssigkeit 7 befinden. Ebenso ist das obere Ende 16 des Schichtungsrohres 14 von der Decke 6 des ersten Speichergefäßes 1 beabstandet. Der Abstand ist vorzugsweise derart gewählt, dass sich oberhalb des oberen Endes 16 maximal ca. 10 bis 25 % des gesamten im ersten Speichergefäß 1 befindlichen Volumens der Speicherflüssigkeit 7 befinden. Die genannten Prozentzahlen können für das obere Ende 16 verschieden von denen für das untere Ende 15 sein. Sie können jedoch auch gleich sein.

In seltenen Fällen endet die Leitung 10 im Bodenbereich des ersten Speichergefäßes 1. In diesem Fall ist die Aussage, dass die Kreislauf-Zuführstelle 8 des ersten Speichergefäßes 1 vom Schichtungsrohr 14 umgeben ist, derart zu verstehen, dass zwar eine lotrechte Projektion des Schichtungsrohres 14 nach unten die Kreislauf-Zuführstelle 8 des ersten Speichergefäßes 1 umschließt, das Schichtungsrohr 14 selbst in Höhenrichtung von der Kreislauf Zuführstelle 8 des ersten Speichergefäßes 1 beabstandet ist. Denn anderenfalls wäre das Schichtungsrohr 14 nur eine Verlängerung der Leitung 10, wenn auch mit erheblich größerem Querschnitt. Bei der Ausgestaltung der Figuren 1 und 2 hingegen - in der Regel also dann, wenn die Kreislauf-Zuführstelle 8 des ersten Speichergefäßes 1 in Höhenrichtung gesehen in etwa mittig des ersten Speichergefäßes 1 angeordnet ist - ist die Aussage, dass die Kreislauf-Zuführstelle 8 des ersten Speichergefäßes 1 von dem Schichtungsrohr 14 umgeben ist, so zu verstehen, dass die Kreislauf-Zuführstelle 8 des ersten Speichergefäßes 1 unterhalb des oberen Endes 16 des Schichtungsrohres 14 und oberhalb des unteren Endes 15 des Schichtungsrohres 14 angeordnet ist. Dies ist in Figur 6 so dargestellt.

Insbesondere in dem Fall, dass der Wärmetauscher 12 im ersten Speichergefäß 1 angeordnet ist, ist weiterhin eine andere - sogar bevorzugte - Ausgestaltung des erfindungsgemäßen Flüssigkeits-Wärmespeichers möglich. Dies wird nachfolgend in Verbindung mit Figur 7 näher erläutert.

Bei der Ausgestaltung des Flüssigkeits-Wärmespeichers gemäß Figur 7 ist ebenfalls eine Mehrzahl von geschlossenen Speichergefäßen 1, 2, 3, vorhanden. Minimal müssen hierbei die Speichergefäße 1 und 2 vorhanden sein. Das Speichergefäß 3 ist nur optional. Es kann gegebenenfalls entfallen.

Auch bei dem Flüssigkeits-Wärmespeicher von Figur 7 sind die Speichergefäße 1, 2, 3 mit der Speicherflüssigkeit 7 gefüllt und bodenseitig derart miteinander verbunden, dass sie eine Sequenz bilden. Weiterhin sind auch bei der Ausgestaltung von Figur 7 die Bodenbereiche der Speichergefäße 1, 2, 3 in der Reihenfolge der Sequenz gesehen niveaugleich oder absteigend angeordnet.

Die Kreislauf-Zuführstelle 8 des ersten Speichergefäßes 1 ist bei der Ausgestaltung gemäß Figur 7 in Höhenrichtung gesehen in etwa mittig des ersten Speichergefäßes 1 angeordnet. Das andere Speichergefäß, welches die Kreislauf-Entnahmestelle 9 aufweist, ist bei der Ausgestaltung gemäß Figur 7 nicht das letzte Speichergefäß 3, sondern das zweite Speichergefäß 2. Weiterhin ist die Kreislauf-Entnahmestelle 9 beim zweiten Speichergefäß 2 in dessen Deckenbereich angeordnet. Die Verbindung der Kreislauf-Entnahmestelle 9 des zweiten Speichergefäßes 2 mit der Kreislauf-Zuführstelle 8 des ersten Speichergefäßes 1 erfolgt über die Pumpe 11.

Wie bereits erwähnt, ist die Heizeinrichtung 12 bei der Ausgestaltung des Flüssigkeits-Wärmespeichers von Figur 7 als Wärmetauscher ausgebildet, der im ersten Speichergefäß 1 angeordnet ist. Weiterhin ist bei der Ausgestaltung gemäß Figur 7 das Schichtungsrohr 14 vorhanden. Im Schichtungsrohr 14 sind sowohl der Wärmetauscher 12 als auch die Kreislauf-Zuführstelle 8 angeordnet.

Der Flüssigkeits-Wärmespeicher von Figur 7 wird wie folgt betrieben:

Dem Wärmetauscher 12 wird über ein Leitungssystem 10' warme Flüssigkeit zugeführt. Zugleich wird die Pumpe 11 angesteuert, so dass die Speicherflüssigkeit 7 vom Deckenbereich des zweiten Speichergefäßes 2 in das Schichtungsrohr 14 gepumpt wird. Analog zur obenstehend in Verbindung mit den Figuren 1 und 2 ausführlich beschriebenen Wirkung steigt die zugeführte Speicherflüssigkeit 7 nach oben, wenn sie warm genug ist bzw. hinreichend erwärmt wird. Anderenfalls tritt sie am unteren Ende 15 des Schichtungsrohres 14 aus dem Schichtungsrohr 14 aus. Zugleich wird über die bodenseitige Verbindung des ersten und des zweiten Speichergefäßes 1, 2 stets die kälteste im ersten Speichergefäß 1 befindliche Speicherflüssigkeit 7 in das zweite Speichergefäß 2 überführt.

Die Ausgestaltung von Figur 7 weist den Vorteil auf, dass die in das Schichtungsrohr 14 eingeleitete Speicherflüssigkeit 7 nicht so kalt ist wie bei der Ausgestaltung der Figuren 1 und 2. Dadurch kann die Speicherflüssigkeit 7 auf ein höheres Temperaturniveau erwärmt werden, so dass noch schneller und noch effektiver als bei der Ausgestaltung der Figuren 1 und 2 eine kleine Schicht zur Erwärmung von Brauchwasser gebildet wird. Auch kann - auch ohne den Wärmetauscher 12 zu betreiben - beispielsweise warme Speicherflüssigkeit 7 vom zweiten Speichergefäß 2 in das erste Speichergefäß 1 gepumpt werden, falls die im ersten Speichergefäß 1 befindliche Speicherflüssigkeit 7 kalt und die im zweiten Speichergefäß 2 befindliche Speicherflüssigkeit 7 warm ist.

Der Flüssigkeits-Wärmespeicher gemäß der Ausgestaltung von Figur 7 kann auf verschiedene Weise weiter gebildet werden.

So ist es beispielsweise möglich, im zweiten Speichergefäß 2 einen weiteren Wärmetauscher 12' anzuordnen. Der weitere Wärmetauscher 12' wird vorzugsweise im unteren Teil des zweiten Speichergefäßes 2 angeordnet. In dem Fall, dass das erste Speichergefäß 1 innerhalb des zweiten Speichergefäßes 2 angeordnet ist, kann der weitere Wärmetauscher 12' insbesondere außen auf der Gefäßwand 5 des ersten Speichergefäßes 1 angeordnet sein. Weiterhin ist in diesem Fall eine Ventileinrichtung 12" vorhanden, mittels derer die eigentlich dem Wärmetauscher 12 zuzuführende warme Flüssigkeit des Leitungssystems 10' zum weiteren Wärmetauscher 12' umleitbar ist.

Der entsprechend modifizierte Flüssigkeits-Wärmespeicher wird wie folgt betrieben: Die warme Flüssigkeit des Leitungssystems 10' wird - mittels einer nicht dargestellten Pumpe - so lange dem Wärmetauscher 12 zugeführt, wie die vom Wärmetauscher 12 zurückgeführte Flüssigkeit kälter als die dem Wärmetauscher 12 zugeführte Flüssigkeit ist. Denn in diesem Fall wird Wärme an die Speicherflüssigkeit 7 abgegeben. Gleichzeitig wird auch die Pumpe 11 angesteuert, so dass sie die Speicherflüssigkeit 7 vom Deckenbereich des zweiten Speichergefäßes 2 in das Schichtungsrohr 14 pumpt. Wenn die Temperatur der Speicherflüssigkeit 7 im ersten Speichergefäß 1 (beispielsweise in der Nähe von dessen Bodenbereich) eine vorbestimmte Solltemperatur erreicht hat, wird die warme Flüssigkeit mittels der Ventileinrichtung 12" zum weiteren Wärmetauscher 12' geleitet. Gleichzeitig wird die Pumpe 11 abgeschaltet.

Eine weitere - in der Regel auf der zuletzt beschriebenen Weiterentwicklung aufbauende - Ausgestaltung besteht darin, dass das zweite Speichergefäß 2 eine weitere Kreislauf-Entnahmestelle 9 aufweist, die über eine Pumpe mit einer Kreislauf-Zuführstelle 8 eines dem zweiten Speichergefäß 2 nachgeordneten Speichergefäßes 3 zumindest temporär verbunden ist. Hierbei ist möglich, dass die weitere Kreislauf-Entnahmestelle 9 des zweiten Speichergefäßes 2 eine von der erstgenannten Kreislauf-Entnahmestelle 9 verschiedene Kreislauf-Entnahmestelle ist. Ebenso ist möglich, dass eine eigene Pumpe verwendet wird. Gemäß der Darstellung von Figur 7 ist jedoch bevorzugt, dass der Pumpe 11 eine Ventileinrichtung 11' zugeordnet ist, mittels derer schaltbar ist, ob die von der Pumpe 11 geförderte Speicherflüssigkeit 7 dem ersten Speichergefäß 1 oder dem dritten Speichergefäß 3 zugeführt wird.

Das Ansteuern der Ventileinrichtung 11' erfolgt dann, wenn die im zweiten Speichergefäß 2 befindliche Speicherflüssigkeit 7 ihre Solltemperatur erreicht hat. Hierbei kann es sich alternativ um die gleiche Solltemperatur wie beim ersten Speichergefäß 1 oder um eine andere Solltemperatur handeln.

Aus den obenstehenden Ausführungen ist ersichtlich, dass das dritte Speichergefäß 3 bei der Ausgestaltung des Flüssigkeits-Wärmespeichers gemäß Figur 7 als "Puffer-Speicher" verwendet wird. Aus diesem Grund ist bevorzugt, dass die Kreislauf-Zuführstelle 8 des nachgeordneten Speichergefäßes 3 im Deckenbereich des nachgeordneten Speichergefäßes 3 angeordnet ist. Denn dadurch kann warme Speicherflüssigkeit 7 nahezu verlustfrei im dritten Speichergefäß zwischengespeichert werden.

Um den "Puffer-Speicher", also das dritte Speichergefäß 3, auf effiziente Weise wieder entleeren zu können, weist gemäß Figur 7 das nachgeordnete Speichergefäß 3 in seinem Deckenbereich ebenfalls eine Kreislauf-Entnahmestelle 9 auf, die über eine weitere Pumpe 11" mit einer Kreislauf-Zuführstelle 8 eines dem nachgeordneten Speichergefäß 3 in der Sequenz von Speichergefäßen 1, 2, 3 vorgeordneten Speichergefäß 1, 2 zumindest temporär verbunden ist. Prinzipiell kann es sich bei dem vorgeordneten Speichergefäß 2 um das andere Speichergefäß 2 handeln, gemäß Ausführungsbeispiel also das zweite Speichergefäß 2. Vorzugsweise handelt es sich jedoch um das erste Speichergefäß 1.

Die übrigen Ausgestaltungen des Flüssigkeits-Wärmespeichers von Figur 7 entsprechen denen, die obenstehend in Verbindung mit den Figuren 1 bis 6 bereits erläutert wurden.

Bisher wurde das "Beladen" des Flüssigkeits-Wärmespeichers erläutert, also dessen Aufwärmen mittels der Heizeinrichtung 12. Die im Flüssigkeits-Wärmespeicher gespeicherte Wärme soll jedoch auch entnommen werden können. Dies wird nachfolgend unter Bezugnahme zunächst auf Figur 6 näher erläutert.

Gemäß Figur 6 weist der Flüssigkeits-Wärmespeicher eine erste Nutz-Entnahmestelle 17 und eine erste Nutz-Rückführstelle 18 auf. Über die erste Nutz-Entnahmestelle 17 ist aus dem Deckenbereich des ersten Speichergefäßes 1 Speicherflüssigkeit 7 entnehmbar. Über die erste Nutz-Rückführstelle 18 ist die entnommene Speicherflüssigkeit 7 dem ersten Speichergefäß 1 wieder zuführbar. Die über die erste Nutz-Entnahmestelle 17 entnommene Speicherflüssigkeit 7 kann beispielsweise einer Brauchwasseraufbereitungseinrichtung 19 zugeführt werden. In der Brauchwasseraufbereitungseinrichtung 19 wird Brauchwasser aufbereitet, das heißt erwärmt.

In analoger Weise weist der Flüssigkeits-Wärmespeicher zumeist auch eine zweite Nutz-Entnahmestelle 20 auf. Über die zweite Nutz-Entnahmestelle 20 ist aus dem Deckenbereich des zweiten Speichergefäßes 2 Speicherflüssigkeit 7 entnehmbar. Die über die zweite Nutz-Entnahmestelle 20 entnommene Speicherflüssigkeit 7 wird ebenfalls dem ersten Speichergefäß 1 zugeführt. Zum Zuführen zum ersten Speichergefäß 1 kann alternativ die erste Nutz-Rückführstelle 18 verwendet werden oder eine eigene, von der ersten Nutz-Rückführstelle 18 verschiedene zweite Nutz-Rückführstelle 21 vorhanden sein. Die über die zweite Nutz-Entnahmestelle 20 entnommene Speicherflüssigkeit 7 kann beispielsweise einer Heizwasseraufbereitungseinrichtung 22 zugeführt werden, um Heizungswasser zu erwärmen.

Gemäß der Darstellung von Figur 6 ist die erste Nutz-Rückführstelle 18 unterhalb der Kreislauf-Zuführstelle 8 des ersten Speichergefäßes 1 angeordnet. In analoger Weise ist auch die zweite Nutz-Rückführstelle 21 unterhalb der Kreislauf-Zuführstelle 8 des ersten Speichergefäßes 1 angeordnet. Diese Ausgestaltung ist - unabhängig vom Vorhandensein oder Nichtvorhandensein des Schichtungsrohres 14 - bevorzugt. Sie ist aber nicht zwingend.

Gemäß Figur 6 ist weiterhin die erste Nutz-Rückführstelle 18 innerhalb des Schichtungsrohres 14 angeordnet. In analoger Weise ist auch die zweite Nutz-Rückführstelle 21 innerhalb des Schichtungsrohres 14 angeordnet. Auch diese Ausgestaltung ist bevorzugt, aber nicht zwingend.

Die obenstehend in Verbindung mit Figur 6 erläuterten Ausgestaltungen zum Entladen des Flüssigkeits-Wärmespeichers sind auch bei dem Flüssigkeits-Wärmespeicher von Figur 7 anwendbar. Ebenso sind die nachfolgend in Verbindung mit Figur 7 erläuterten alternativen Ausgestaltungen zum Entladen des Flüssigkeits-Wärmespeichers auch bei den Flüssigkeits-Wärmespeichern der Figuren 1 bis 6 anwendbar.

Gemäß Figur 7 ist im ersten Speichergefäß 1 - genauer: zumindest im oberen Teil des ersten Speichergefäßes 1, in der Regel über einen wesentlichen Teil der Höhe des ersten Speichergefäßes 1 - ein Wärmetauscher 19' angeordnet. Beispielsweise kann der Wärmetauscher 19' außen auf das Schichtungsrohr 14 gewickelt sein. Dem Wärmetauscher 19' ist kaltes Brauchwasser zuführbar. Es durchläuft den Wärmetauscher 19' und ist dem Wärmetauscher 19' als warmes Brauchwasser entnehmbar. Soweit erforderlich, kann dem Wärmetauscher 19 ein Durchlauferhitzer 19" nachgeordnet sein.

Gemäß Figur 7 ist weiterhin in einem dem ersten Speichergefäß 1 nachgeordneten Speichergefäß 2, insbesondere im zweiten Speichergefäß 2, ein Wärmetauscher 22' angeordnet. Dem Wärmetauscher 22' ist kaltes Wasser eines Heizungskreislaufs 22" zuführbar. Es wird im Wärmetauscher 22' aufgewärmt und dem Heizungskreislauf 22" wieder zugeführt.

Der Wärmetauscher 22' ist innerhalb des Speichergefäßes 2, in dem er angeordnet ist, in dessen oberem Teil angeordnet. Er kann insbesondere im Falle der Anordnung des ersten Speichergefäßes 1 innerhalb des zweiten Speichergefäßes 2 außen auf das erste Speichergefäß 1 gewickelt sein.

Im Betrieb des Flüssigkeits-Wärmespeichers kann es geschehen, dass nachgeordnete Speichergefäße 3 (bei einer Ausgestaltung mit insgesamt drei Speichergefäßen 1, 2, 3 das dritte Speichergefäß 3) im Laufe der Zeit ihre Wärme abgeben und vorläufig nicht wieder aufgeheizt werden können. Beispielsweise kann im Falle der Ausgestaltung des erfindungsgemäßen Flüssigkeits-Wärmespeichers als saisonaler Speicher dieser Fall in den Wintermonaten eintreten, insbesondere in der zweiten Winterhälfte. In derartigen Fällen, wenn also die nachgeordneten Speichergefäße 3 ausgekühlt sind und momentan nicht wieder aufgewärmt werden können, kann es sinnvoll sein, die nachgeordneten Speichergefäße 3 aus dem Heizkreislauf zum Aufheizen des Flüssigkeits-Wärmespeichers auszukoppeln. Soweit es die Ausgestaltung des Flüssigkeits-Wärmespeichers von Figur 7 betrifft, wurde bereits erläutert, wie ein derartiges Auskoppeln erfolgen kann. Bei der Ausgestaltung des Flüssigkeits-Wärmespeichers gemäß den Figuren 1 und 2 ist bevorzugt, dass der Flüssigkeits-Wärmespeicher eine Schalteinrichtung 23 aufweist. Mittels der Schalteinrichtung 23 ist die Kreislauf-Entnahmestelle 9 eines anderen als des letzten Speichergefäßes 3 mit der Leitung 10 verbindbar, gemäß der Darstellung der Figuren 1 bis 3 das zweite Speichergefäß 2. Die dem anderen (hier dem zweiten) Speichergefäß 2 in der Sequenz von Speichergefäßen 1, 2, 3 nachgeordneten Speichergefäße 3 (hier nur das dritte Speichergefäß 3) sind von der Leitung 10 trennbar.

Im einfachsten, in den Figuren 1 und 2 dargestellten Fall besteht die Schalteinrichtung 23 aus zwei Ventilen 24, die getrennt voneinander betätigt werden können. Die Betätigung kann alternativ manuell oder automatisiert erfolgen. Alternativ kann die Schalteinrichtung 23 beispielsweise als Dreiwegeventil ausgebildet sein. Auch in diesem Fall ist alternativ eine manuelle Betätigung oder eine automatische Betätigung möglich.

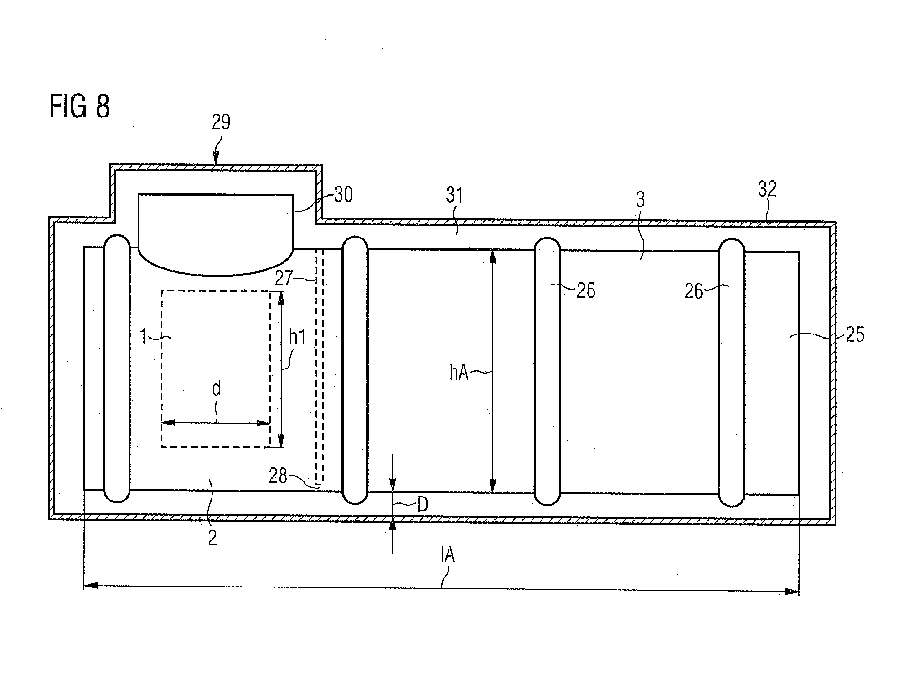

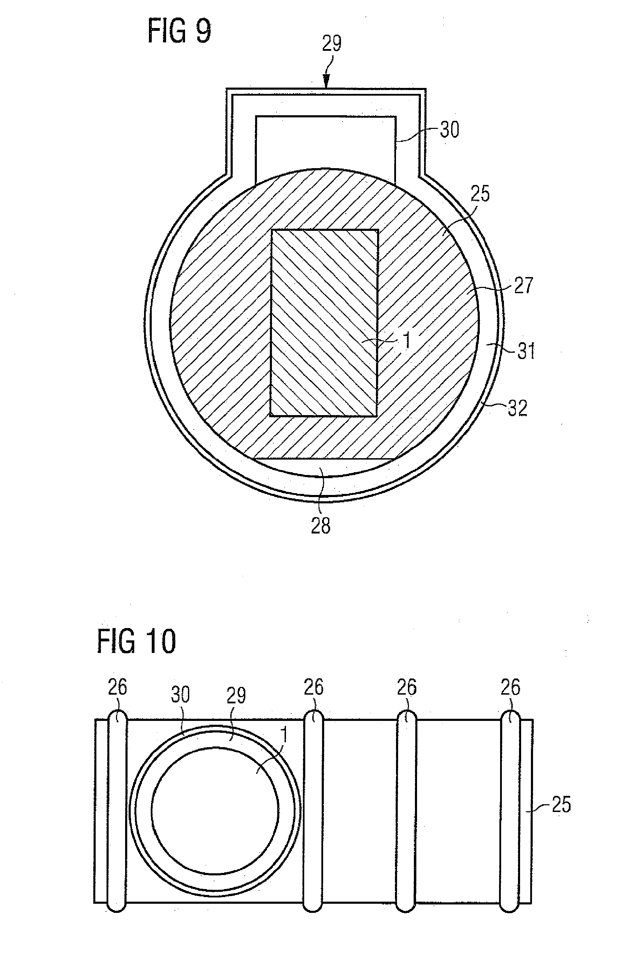

Nachstehend wird in Verbindung mit den Figuren 8 bis 10 eine bevorzugte mechanischkonstruktive Ausgestaltung des erfindungsgemäßen Flüssigkeits-Wärmespeichers näher erläutert. Die Ausgestaltung der Figuren 8 bis 10 baut auf der funktionalen Ausgestaltung auf, die obenstehend in Verbindung mit Figur 7 beschrieben wurde.

Gemäß den Figuren 8 bis 10 weist der Flüssigkeits-Wärmespeicher eine Außenhülle 25 auf. Die Außenhülle 25 ist einstückig ausgebildet. Sie bildet die Außenwand des zweiten und des dritten Speichergefäßes 2, 3. Die Außenhülle 25 kann beispielsweise aus einem Kunststoff bestehen, insbesondere aus einem glasfaserverstärkten Kunststoff (GFK).

Es ist möglich, dass die Außenhülle 25 auf ihrer Außenseite Rippen 26 aufweist. Dies ist jedoch nicht zwingend erforderlich.

In der Außenhülle 25 ist eine Trennwand 27 angeordnet. Die Trennwand 27 verläuft vertikal. Sie trennt das zweite Speichergefäß 2 und das dritte Speichergefäß 3 voneinander. Die Trennwand 27 kann aus einem Dämmmaterial bestehen, beispielsweise aus einem Polyurethanschaum.

Vorzugsweise ist die Trennwand 27 vom Boden der Außenhülle 25 geringfügig beabstandet. Dadurch verbleibt zwischen der Trennwand 27 und dem Boden der Außenhülle 25 ein Spalt 28. Der Spalt 28 bildet die bodenseitige Verbindung des zweiten und des dritten Speichergefäßes 2, 3 miteinander.

Auf Grund der Anordnung sowohl des zweiten als auch des dritten Speichergefäßes 2, 3 im Inneren der Außenhülle 25 sind das zweite und das dritte Speichergefäß 2, 3 nebeneinander angeordnet. Das erste Speichergefäß 1 ist hingegen innerhalb des zweiten Speichergefäßes 2 angeordnet.

Auf Grund der obenstehend beschriebenen Ausgestaltung des Flüssigkeits-Wärmespeichers kann der Flüssigkeits-Wärmespeicher vorgefertigt werden und an seinem späteren Einsatzort als Einheit aufgestellt werden.

Vorzugsweise weist die Außenhülle 25 horizontal eine größere Erstreckung auf als vertikal. Beispielsweise kann die Außenhülle 25 in Horizontalrichtung eine Länge 1A von 8 bis 15 m aufweisen und in Vertikalrichtung eine Höhe hA von 2 m bis 4 m ("liegende Anordnung"). In einer zur Längsrichtung normalen Ebene gesehen kann der Querschnitt der Außenhülle 25 prinzipiell beliebig sein. Bevorzugt ist ein rechteckiger, sechseckiger, achteckiger oder - besonders bevorzugt - kreisförmiger Querschnitt.

Das von der Außenhülle 26 umschlossene Volumen liegt in der Regel zwischen 20 m³ und 250 m³, beispielsweise bei 30 m³ bis 100 m³. Besonders bevorzugt ist ein Volumenbereich von 40 m³ bis 60 m³_{.}

Die Anordnung der Trennwand 27 kann nach Bedarf gewählt werden. Insbesondere kann die Trennwand 27 in Horizontalrichtung gesehen mittig angeordnet sein, so dass die Teilvolumina auf beiden Seiten der Trennwand 27 gleich groß sind. Oftmals ist die Trennwand 27 in Horizontalrichtung gesehen jedoch außermittig angeordnet. Die Anordnung ist in diesem Fall in der Regel derart, dass das dritte Speichergefäß 3 ein größeres Volumen aufweist als das zweite Speichergefäß 2. Der Anteil des dritten Speichergefäßes 3 am gesamten von der Außenhülle 25 umschlossenen Volumen beträgt in der Regel 60 bis 85 %. Der Anteil steigt in der Regel mit dem von der Außenhülle 25 insgesamt umschlossenen Volumen an. Wenn beispielsweise die Außenhülle 25 ein Gesamtvolumen von 60 m³ umschließt, kann eine Aufteilung von 60:40 sinnvoll sein (also 36 m³ für das dritte Speichergefäß 3, 24 m³ für das erste und das zweite Speichergefäß 1, 2). Bei einem umschlossenen Gesamtvolumen von 100 m³ kann eine Aufteilung von beispielsweise 70:30 sinnvoll sein (70 m³ für das dritte Speichergefäß 3, 30 m³ für das erste und das zweite Speichergefäß 1, 2). Bei einem umschlossenen Gesamtvolumen von 150 m³ kann beispielsweise eine Aufteilung von 76:24 gewählt werden (also 114 m³ für das dritte Speichergefäß 3, 36 m³ für das erste und das zweite Speichergefäß 1, 2). Die angegebenen Zahlenwerte sind selbstverständlich rein beispielhaft.

Wie bereits erwähnt, ist bei der Ausgestaltung der Figuren 8 bis 10 das erste Speichergefäß 1 innerhalb des zweiten Speichergefäßes 2 angeordnet. Innerhalb des ersten Speichergefäßes 1 sind selbstverständlich die dort benötigten Verrohrungen angeordnet. Die Außenhülle 25 weist an ihrer Oberseite in den meisten Fällen eine Zugangsöffnung 29 auf. Beispielsweise kann an der Oberseite der Außenhülle 25 ein Stutzen 30 angeformt sein, der seinerseits die Zugangsöffnung 29 enthält. Die Zugangsöffnung 29 weist einen Querschnitt auf, nachfolgend Öffnungsquerschnitt genannt. Der Öffnungsquerschnitt ist meist derart gewählt, dass eine Person über die Zugangsöffnung 29 Zugang zum Inneren der Außenhülle 25 hat. Die Zugangsöffnung 29 wird daher üblicherweise als Mannloch bezeichnet. Auf Grund der Zugangsöffnung 29 ist es beispielsweise möglich, dass eine Person die Außenhülle 25 auf ihrer Innenseite inspizieren kann. Weiterhin ist es möglich, im Rahmen der Fertigung des Flüssigkeits-Wärmespeichers das von der Außenhülle 25 umschlossene Volumen zu betreten und beispielsweise die erwähnte Trennwand 27 einzubringen.

Das erste Speichergefäß 1 weist horizontal gesehen ebenfalls einen Querschnitt auf. Dieser Querschnitt wird nachfolgend zur sprachlichen Unterscheidung vom Öffnungsquerschnitt als Gefäßquerschnitt bezeichnet. Vorzugsweise ist der Gefäßquerschnitt kleiner als der Öffnungsquerschnitt. Dadurch ist es möglich, das erste Speichergefäß 1 als Baueinheit vorzufertigen und erst dann in das von der Außenhülle 25 umschlossene Volumen einzubringen. Insbesondere bildet daher das Teilvolumen, das unmittelbar an die Zugangsöffnung 29 angrenzt, das zweite Speichergefäß 2. Die Zugangsöffnung 29 ist folglich im Bereich des zweiten Speichergefäßes 2 angeordnet.

Wie obenstehend erwähnt, können die Wärmetauscher 12', 22' auf der Außenseite der Seitenwand 5 des ersten Speichergefäßes 1 angeordnet sein. Wenn dies der Fall ist, ist der Gefäßquerschnitt des ersten Speichergefäßes 1 selbstverständlich auf die Gesamtanordnung bezogen, also einschließlich der Wärmetauscher 12', 22'. Denn dadurch ist es weiterhin möglich, das erste Speichergefäß 1 einschließlich seiner außenseitigen Verrohrung vorzufertigen ("alles dran - alles drin") und in diesem Zustand in das zweite Speichergefäß 2 einzubringen.

Die Seitenwände 5, der Boden 4 und die Decke 6 des ersten Speichergefäßes 1 bilden in ihrer Gesamtheit eine Zwischenhülle für das erste Speichergefäß 1, die das erste Speichergefäß 1 vom zweiten Speichergefäß 2 trennt. Die Zwischenhülle besteht vorzugsweise aus einem Dämmmaterial, beispielsweise aus Polyurethanschaum. Die Dicke der Zwischenhülle kann nach Bedarf gewählt werden. In der Regel liegt sie zwischen 20 mm und 50 mm.

Wie dargestellt, weist das erste Speichergefäß 1 vorzugsweise vertikal eine größere Erstreckung auf als horizontal (stehende Anordnung). Der Querschnitt des ersten Speichergefäßes 1 (in einer horizontalen Ebene gesehen) kann nach Bedarf gewählt werden. Beispielsweise kann er quadratisch, rechteckig, sechseckig, achteckig usw. sein. Vorzugsweise ist der Querschnitt im Wesentlichen kreisförmig. Das erste Speichergefäß 1 kann beispielsweise eine Höhe h1 von ca. 2 m und einen Durchmesser d von ca. 70 cm aufweisen. Bei einem angenommenen Innendurchmesser von ca. 60 cm ergibt sich in diesem Fall für das erste Speichergefäß 1 ein Gefäßvolumen von ca. 5501. Die genannten Zahlen sind selbstverständlich rein beispielhaft. Es können auch andere Werte gewählt werden.

Zum Minimieren von Wärmeverlusten sind die Speichergefäße 1, 2, 3 vorzugsweise thermisch isolierend ausgebildet. Auch dies wurde bereits erwähnt. In Verbindung mit der Ausgestaltung des Flüssigkeits-Wärmespeichers gemäß den Figuren 8 bis 10 ist daher vorgesehen, dass die Außenhülle 25 von einer Dämmschicht 31 umgeben ist.

Die Dämmschicht 31 kann beispielsweise als Schüttung ausgebildet sein. Beispielsweise kann bei einer unterirdischen Anordnung der Außenhülle 25 der Boden einer Grube mit Blähtonkugeln oder dergleichen bedeckt werden, sodann die Außenhülle 25 gesetzt werden und als nächstes seitlich und oben die Schüttung vervollständigt werden. Sodann kann beispielsweise eine Plane aufgelegt werden und die Plane mit einer Erdschicht abgedeckt werden. In der Regel ist die Dämmschicht 31 jedoch als formstabile Schäumung 31 ausgebildet. Die Schäumung 31 kann alternativ einschichtig oder mehrschichtig ausgebildet sein. Eine Dicke D der Dämmschicht 31 kann nach Bedarf gewählt sein. In aller Regel wird die Dicke D mindestens 50 mm betragen, meist sogar 100 mm und mehr. Beispielsweise kann die Dicke D 150 bis 200 mm betragen.

Das Material der formstabilen Schäumung 31 kann nach Bedarf gewählt sein. Insbesondere Polyurethanschäume sind möglich und auch bevorzugt.

Auf die Schäumung 31 kann außen eine Schutzschicht 32 aufgebracht sein. Das Aufbringen der Schutzschicht 32 kann insbesondere durch Aufspritzen erfolgen. Das Vorhandensein der Schutzschicht 32 ist insbesondere dann sinnvoll, wenn die Schäumung 31 Umwelteinflüssen unmittelbar ausgesetzt ist, die Außenhülle 25 also entweder überirdisch im Freien angeordnet ist oder unterirdisch im Erdreich angeordnet ist. Die Schutzschicht 32 erfüllt vorzugsweise die Eigenschaften, dass sie witterungsbeständig, reiß- und abriebfest sowie wasserdicht und wasserresistent ist. Als Material für die Schutzschicht 32 kommen insbesondere Polyharnstoffe in Frage. Ein Beispiel eines geeigneten Polyharnstoffes ist das Material, das unter dem Handelsnamen Polyurea erhältlich ist.

Die vorliegende Erfindung weist viele Vorteile auf. Insbesondere ist der Flüssigkeits-Wärmespeicher der vorliegenden Erfindung einerseits extrem einfach ausgebildet und arbeitet dennoch hocheffizient. Die Einfachheit der Ausgestaltung ist hierbei dadurch bewirkt, dass zum Ausbilden der Wärmeschichtung ausschließlich naturgegebene physikalische Gesetze ausgenützt werden, anstatt eine aktive Beeinflussung der Flüssigkeitsströmung vorzunehmen. Weiterhin ist durch die Anordnung der Speichergefäße 1, 2, 3 nebeneinander auf einfache Weise ein großes Speichervolumen realisierbar, ohne eine große Bauhöhe zu benötigen. Aus diesem Grund ist der erfindungsgemäße Flüssigkeits-Wärmespeicher auch in einer Ausgestaltung als saisonaler Speicher bei Neubauten einfacher zu realisieren und bei Altbauten überhaupt möglich. Beispielsweise kann der erfindungsgemäße Flüssigkeits-Wärmespeicher bei einem Neubau unter der Bodenplatte oder dem Fundament des Neubaus angeordnet werden. Sowohl bei einem Altbau als auch bei einem Neubau kann der erfindungsgemäße Flüssigkeits-Wärmespeicher neben dem Alt- bzw. Neubau im Boden angeordnet werden, beispielsweise unter einer Garage. Auch ist eine Anordnung in bereits bestehenden Kellerräumen eines Altbaus möglich. Insbesondere kann ein zuvor als Heizöllagerraum genutzter Raum hierfür verwendet werden. Auf Grund des Aufbaus der Wärmeschichtung in den Speichergefäßen 1, 2, 3 im Wesentlichen unabhängig voneinander ist eine sehr effiziente Erwärmung insbesondere des ersten Speichergefäßes 1 erreichbar.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1, 2, 3: Speichergefäße
- 4: Böden
- 5: Seitenwände
- 6: Decken
- 7: Speicherflüssigkeit
- 8: Kreislauf-Zuführstellen
- 9: Kreislauf-Entnahmestellen
- 10: Leitung
- 10': Leitungssystem
- 11, 11': Pumpe
- 11', 12": Ventileinrichtung
- 12: Heizeinrichtung
- 12', 19', 22': Wärmetauscher
- 13: Leitungsabschnitt
- 14: Schichtungsrohr
- 15: unteres Ende
- 16: oberes Ende
- 17, 20: Nutz-Entnahmestellen
- 18,21: Nutz-Rückführstellen
- 19: Brauchwasseraufbereitungseinrichtung
- 19": Durchlauferhitzer
- 22: Heizwasseraufbereitungseinrichtung
- 22": Heizungskreislauf
- 23: Schalteinrichtung
- 24: Ventile
- 25: Außenhülle
- 26: Rippen
- 27: Trennwand
- 28: Spalt
- 29: Zugangsöffnung
- 30: Stutzen
- 31: Schäumung/Dämmschicht
- 32: Schutzschicht

- d: Durchmesser
- D: Dicke
- hA: Höhe
- h1: Höhe
- la: Länge

## Patentansprüche

1. Flüssigkeits-Wärmespeicher,
- wobei der Flüssigkeits-Wärmespeicher eine Mehrzahl von geschlossenen Speichergefäßen (1, 2, 3) aufweist,
- wobei die Speichergefäße (1, 2, 3) mit einer Speicherflüssigkeit (7) gefüllt sind,
- wobei die Speichergefäße (1, 2, 3) bodenseitig derart miteinander verbunden sind, dass sie eine Sequenz bilden,
- wobei zumindest das erste Speichergefäß (1) eine Kreislauf-Zuführstelle (8) aufweist und mindestens ein anderes (2, 3) der Speichergefäße (1, 2, 3) eine Kreislauf-Entnahmestelle (9) aufweist,
- wobei die Kreislauf-Entnahmestelle (9) des anderen Speichergefäßes (2, 3) mit der Kreislauf-Zuführstelle (8) des ersten Speichergefäßes (1) über eine Leitung (10) verbunden ist,
- wobei in der Leitung (10) eine Pumpe (11, 11") angeordnet ist, mittels derer die Speicherflüssigkeit (7) vom anderen Speichergefäß (2, 3) in das erste Speichergefäß (1) pumpbar ist,
- wobei der Flüssigkeits-Wärmespeicher eine Heizeinrichtung (12) aufweist, mittels derer die vom anderen Speichergefäß (2, 3) in das erste Speichergefäß (1) gepumpte Speicherflüssigkeit (7) erwärmbar ist, und
- wobei das andere Speichergefäß (2, 3) und etwaige in der Sequenz von Speichergefäßen (1 bis 3) zwischen dem ersten und dem anderen Speichergefäß (1,3) angeordnete Speichergefäße (2) derart ausgebildet sind, dass die über die jeweilige bodenseitige Verbindung in das jeweilige Speichergefäß (2, 3) geförderte Speicherflüssigkeit (7)
-- in dem Fall, dass sie wärmer als die bereits im jeweiligen Speichergefäß (2, 3) befindliche Speicherflüssigkeit (7) ist, in dem jeweiligen Speichergefäß (2, 3) nach oben steigt, bis sie den Deckenbereich des jeweiligen Speichergefäßes (2, 3) erreicht oder auf eine Schicht der Speicherflüssigkeit (7) stößt, welche die gleiche Temperatur aufweist, und
-- anderenfalls im Bodenbereich des jeweiligen Speichergefäßes (2, 3) verbleibt.

2. Flüssigkeits-Wärmespeicher nach Anspruch 1,
**dadurch gekennzeichnet,**
**dass** die Kreislauf-Entnahmestelle (9) des anderen Speichergefäßes (2, 3) im Deckenbereich des anderen Speichergefäßes (2, 3) angeordnet ist.

3. Flüssigkeits-Wärmespeicher nach Anspruch 2,
**dadurch gekennzeichnet,**
**dass** das andere Speichergefäß (2) eine weitere Kreislauf-Entnahmestelle (9) aufweist, die über die Pumpe (11) oder eine andere Pumpe mit einer Kreislauf-Zuführstelle (8) eines dem anderen Speichergefäß (2) in der Sequenz von Speichergefäßen (1, 2, 3) nachgeordneten Speichergefäßes (3) zumindest temporär verbunden ist.

4. Flüssigkeits-Wärmespeicher nach Anspruch 3,
**dadurch gekennzeichnet,**
**dass** die Kreislauf-Zuführstelle (8) des nachgeordneten Speichergefäßes (3) im Deckenbereich des nachgeordneten Speichergefäßes (3) angeordnet ist.

5. Flüssigkeits-Wärmespeicher nach Anspruch 3 oder 4,
**dadurch gekennzeichnet,**
**dass** das nachgeordnete Speichergefäß (3) in seinen Deckenbereich ebenfalls eine Kreislauf-Entnahmestelle (9) aufweist, die über die Pumpe (11) oder eine andere Pumpe mit einer Kreislauf-Zuführstelle (8) eines dem nachgeordneten Speichergefäß (3) in der Sequenz von Speichergefäßen (1, 2, 3) vorgeordneten Speichergefäßes (1, 2), insbesondere des ersten oder des anderen Speichergefäßes (1, 2), zumindest temporär verbunden ist.

6. Flüssigkeits-Wärmespeicher nach Anspruch 3, 4 oder 5,
**dadurch gekennzeichnet,**
**dass** der Flüssigkeits-Wärmespeicher eine einstückige Außenhülle (25) aufweist, dass die Außenhülle (25) die Außenwand des zweiten und des dritten Speichergefäßes (2, 3) bildet, dass in der Außenhülle (25) eine vertikal verlaufende Trennwand (27) angeordnet ist, dass die Trennwand (27) das zweite und das dritte Speichergefäß (2, 3) voneinander trennt und dass das erste Speichergefäß (1) innerhalb des zweiten Speichergefäßes (2) angeordnet ist.

7. Flüssigkeits-Wärmespeicher nach Anspruch 6,
**dadurch gekennzeichnet,**
**dass** die Trennwand (27) vom Boden der Außenhülle (25) beabstandet ist, so dass durch die Beabstandung die bodenseitige Verbindung des zweiten und des dritten Speichergefäßes (2, 3) miteinander gebildet ist.

8. Flüssigkeits-Wärmespeicher nach Anspruch 6 oder 7,
**dadurch gekennzeichnet,**
**dass** die Außenhülle (25) horizontal eine größere Erstreckung aufweist als vertikal.

9. Flüssigkeits-Wärmespeicher nach Anspruch 6, 7 oder 8,
**dadurch gekennzeichnet,**
**dass** die Trennwand (27) in Horizontalrichtung gesehen außermittig angeordnet ist, so dass das dritte Speichergefäß (3) ein größeres Volumen aufweist als das zweite Speichergefäß (2).

10. Flüssigkeits-Wärmespeicher nach einem der Ansprüche 6 bis 9,
**dadurch gekennzeichnet,**
**dass** die Trennwand (27) aus einem Dämmmaterial besteht, beispielsweise aus Polyurethanschaum.

11. Flüssigkeits-Wärmespeicher nach einem der Ansprüche 6 bis 10,
**dadurch gekennzeichnet,**
**dass** die Außenhülle (25) von einer als formstabile Schäumung ausgebildeten Dämmschicht (31) umgeben ist, auf die außen eine witterungsbeständige, reiß- und abriebfeste sowie wasserdichte und wasserresistente Schutzschicht (32) aufgebracht ist.

12. Flüssigkeits-Wärmespeicher nach einem der Ansprüche 6 bis 11,
**dadurch gekennzeichnet,**
**dass** die Außenhülle (25) im Bereich des zweiten Speichergefäßes (2) an ihrer Oberseite eine Zugangsöffnung (29) mit einem Öffnungsquerschnitt aufweist und dass das erste Speichergefäß (1) horizontal gesehen einen Gefäßquerschnitt aufweist, der kleiner als der Öffnungsquerschnitt ist.

13. Flüssigkeits-Wärmespeicher nach einem der Ansprüche 6 bis 12,
**dadurch gekennzeichnet,**
**dass** das erste vom zweiten Speichergefäß (1, 2) durch eine Zwischenhülle getrennt ist, die aus einem Dämmmaterial besteht, beispielsweise aus Polyurethanschaum.

14. Flüssigkeits-Wärmespeicher nach einem der Ansprüche 6 bis 13,
**dadurch gekennzeichnet,**
**dass** das erste Speichergefäß (1) vertikal eine größere Erstreckung aufweist als horizontal.
